# FASCICULE DE BREVET EUROPEEN

(11) **EP 1 301 910 B1**
(45) Date de publication et mention de la délivrance du brevet: **18.03.2009**
(21) Numéro de dépôt: 01955430.2
(22) Date de dépôt: 17.07.2001
(51) Int. Cl.: G06Q 20/00

(54) **PROCEDE POUR SECURISER UNE TRANSACTION VIA UN RESEAU DE TELECOMMUNICATION, ET SYSTEME DE MISE EN OEUVRE DU PROCEDE**
VERFAHREN ZUM ABSICHERN EINER TRANSAKTION AUF EINEM TELEKOMMUNIKATIONSNETZWERK UND SYSTEM ZUR DURCHFÜHRUNG DES VERFAHRENS
METHOD FOR MAKING SECURE A TRANSACTION VIA A TELECOMMUNICATION NETWORK, AND SYSTEM THEREFOR

(30) Priorité: 17.07.2000 FR 0009353
(43) Date de publication de la demande: 16.04.2003
(73) Titulaire: Afriat, Hervé, 75014 Paris (FR)
(72) Inventeur: Afriat, Hervé, 75014 Paris (FR)
(74) Mandataire: Bolinches, Michel Jean-Marie
(86) Numéro de dépôt international: PCT/FR2001/002322
(87) Numéro de publication internationale: WO 2002/007113

(56) Documents cités:
- EP-A- 0 926 611
- WO-A-99/23617
- WO-A-99/66436
- FR-A- 2 733 068
- FR-A- 2 779 896
- US-A- 5 757 917
- US-A- 5 903 721

## Description

L'invention concerne un procédé pour sécuriser une transaction via un réseau de télécommunication.

Le formidable essor du réseau de télécommunication Internet et de toutes les formes de communication qu'il permet, se trouve néanmoins confronté aux problèmes liés à la sécurité et au piratage, dès l'instant où un tel réseau est de type ouvert, c'est-à-dire que des personnes physiques et/ou morales peuvent librement se connecter sur ce réseau.

Toutefois, une personne malveillante a la possibilité d'espionner les informations transmises sur le réseau, de détecter des messages codés où chiffrés pouvant contenir des données confidentielles, en particulier un code de carte bancaire, de déchiffrer ces messages, de reconstituer le code d'une carte bancaire et ensuite de l'utiliser à l'insu du titulaire de la carte, ...

Le commerce électronique sur Internet se développe de plus en plus mais il se heurte toujours au problème de la sécurité du paiement. Pour tenter de remédier à ce problème de sécurité de nombreux systèmes ont été imaginés et dont la plupart mettent en oeuvre des systèmes à base de codage ou de cryptage des informations qui sont transmises par le réseau. Ces systèmes sont plus ou moins complexes mais aucun d'entre eux ne permet de garantir une invulnérabilité totale car des machines toujours plus puissantes permettent de casser toujours plus rapidement les codes et/ou les clés utilisées.

Le document US-5,903,721 décrit un mode de transaction par l'intermédiaire d'un réseau de télécommunication du type Internet faisant intervenir un client, un fournisseur et une entité de contrôle.

Selon ce procédé, le client envoie son identification et une demande de transaction à un fournisseur par le réseau Internet puis se met en attente. Le fournisseur envoie alors une image de la transaction ainsi que l'identification du client, par le réseau Internet à une entité de contrôle. Cette dernière exécute ensuite deux fonctions : la première est de s'assurer auprès d'un organisme bancaire que le compte du client est bien approvisionné et la seconde est d'authentifier le client par le calcul et la comparaison d'un mot de passe. Enfin, l'entité de contrôle se met en rapport avec l'ordinateur du client (et non avec le client lui-même en composant son numéro de téléphone) pour procéder à l'authentification du client, avant de valider la transaction.

Le document FR-2 779 896 décrit un procédé pour payer à distance l'acquisition d'un bien et/ou d'un service à partir d'un radio-téléphone mobile. Ce procédé fait intervenir un serveur de paiement, un serveur de vente qui sont connectés à un réseau de télécommunication ouvert, par exemple le réseau Internet. Le radio-téléphone mobile est quant à lui relié via une liaison hertzienne à un réseau de radiocommunication géré par un centre de gestion et il peut naviguer au sein du réseau Internet, notamment pour accéder au serveur de paiement et au serveur de vente.

Le procédé porte essentiellement sur les opérations d'identification et d'authentification de l'acheteur par le centre de gestion, le serveur de paiement ou un centre de contrôle, le dialogue entre l'acheteur et l'entité de contrôle se faisant partiellement par un réseau de télécommunication ouvert, de type Internet.

Il consiste ainsi à identifier l'acheteur pour s'assurer qu'il est bien un abonné inscrit sur la liste des abonnés du réseau de télécommunication. Cette étape d'identification de l'acheteur consiste en la transmission par l'abonné d'un identifiant et en l'authentification de l'abonné par le centre de contrôle.

Pour permettre d'éviter toute ambiguïté dans les termes utilisés, on définira :
- une entité de contrôle comme pouvant être un tiers de confiance, un gestionnaire de comptes, une banque ou un organisme financier, un opérateur téléphonique,...
- un réseau fermé comme étant un réseau de télécommunication établi entre deux entités seulement, soit de façon permanente par l'intermédiaire d'une ligne spécialisée ou analogue, soit de façon temporaire par l'intermédiaire du réseau téléphonique, du réseau Transpac ou analogue, après composition d'un numéro d'appel de l'une des entités par l'autre entité,
- un réseau ouvert comme étant un réseau de télécommunication avec plus de deux entités, comme par exemple le réseau Internet, un réseau d'entreprise ou analogue, et
- un client comme étant une personne physique ou morale qui a à sa disposition un terminal à savoir un équipement capable de communiquer sur un réseau fermé et lui permettant de composer ou de recevoir un numéro d'appel par l'intermédiaire d'un téléphone fixe ou portable, d'un modem ou analogue d'une part, et un poste client à savoir un équipement tel un micro-ordinateur, un assistant numérique, une console de jeu, un décodeur de télévision ou analogue qui permet au client de communiquer avec un fournisseur de biens et/ou de services d'autre part.

Un but de l'invention est de concevoir un procédé qui soit en mesure de sécuriser une transaction effectuée à partir d'un réseau de télécommunication, de type Internet par exemple, tout en restant simple dans sa mise en oeuvre.

A cet effet, l'invention propose un procédé pour sécuriser une transaction via un réseau de télécommunication, le procédé faisant au moins intervenir un client, un fournisseur de biens et/ou de services et une entité de contrôle, procédé qui est caractérisé en ce qu'il consiste, une fois que le client a décidé de la transaction près dudit fournisseur, à utiliser un réseau de télécommunication fermé de type réseau téléphonique, qui nécessite la composition d'un numéro d'appel pour mettre en communication le client et l'entité de contrôle et à faire établir cette communication à l'initiative de l'entité de contrôle, de manière à permettre au client de valider sa transaction et à l'entité de contrôle d'identifier le client.

C'est l'entité de contrôle qui compose le numéro d'appel du client pour que ce dernier valide la transaction qu'il vient d'effectuer près du fournisseur de biens et/ou de services.

Selon une autre caractéristique de l'invention, lorsque la communication est établie entre le client et l'entité de contrôle via le réseau de télécommunication fermé, le procédé consiste à faire transmettre par le client un code confidentiel pour valider son achat et permettre à l'entité de contrôle d'identifier le client à partir du numéro d'appel du client et de son code confidentiel qui sont connus de l'entité de contrôle, sachant que le code confidentiel attribué au client par l'entité de contrôle ne transite pas par un réseau de télécommunication ouvert.

Avantageusement, le procédé selon l'invention ne fait pas intervenir l'utilisation d'une carte bancaire et du code confidentiel associé à cette carte.

D'une manière générale, le client peut communiquer avec le fournisseur soit par un poste connecté sur un réseau de télécommunication ouvert ou fermé, soit directement en se déplaçant chez le fournisseur ; le fournisseur et l'entité de contrôle peuvent communiquer par un réseau de télécommunication ouvert ou fermé ; alors que le client et l'entité de contrôle communiquent par un réseau de télécommunication fermé pour garantir un niveau de sécurité élevé.

Par ailleurs, le client est équipé d'un poste client, tel un micro-ordinateur classique qui peut être connecté sur un réseau de télécommunication ouvert ou fermé, et d'un terminal tel un poste téléphonique fixe ou portable connecté sur un réseau de télécommunication fermé.

Selon un exemple avantageux de mise en oeuvre du procédé, le poste client et son terminal peuvent être regroupés au sein d'une même unité qui est avantageusement constituée par un téléphone portable.

Le procédé selon l'invention présente notamment l'avantage de permettre la mise en place d'un commerce électronique qui apporte une solution nouvelle à la sécurisation d'une transaction faite sur un réseau de télécommunication de type Internet et ce, en utilisant un second réseau de type fermé qui peut être simplement constitué par le réseau téléphonique sans nécessiter un investissement particulier pour la mise en oeuvre du procédé.

Un autre avantage réside dans la possibilité de réaliser des transactions sans utiliser une quelconque carte bancaire, ce qui permet de s'affranchir de toute transmission d'un numéro de carte bancaire et du code confidentiel associé, et il en résulte un niveau de sécurité élevé.

Un exemple d'application du procédé selon l'invention concerne le commerce électronique sur Internet où des serveurs marchands, via un serveur de paiement, proposent la délivrance de biens et/ou de services à des internautes qui deviennent des clients.

D'autres avantages, caractéristiques et détails de l'invention ressortiront du complément de description qui va suivre en référence à des dessins annexés, donnés uniquement à titre d'exemple et dans lesquels :
- la figure 1 illustre schématiquement et de manière générale les intervenants dans le procédé selon l'invention, et
- la figure 2 illustre schématiquement un exemple de mise en oeuvre du procédé selon l'invention dans le cas d'un commerce électronique via le réseau Internet.

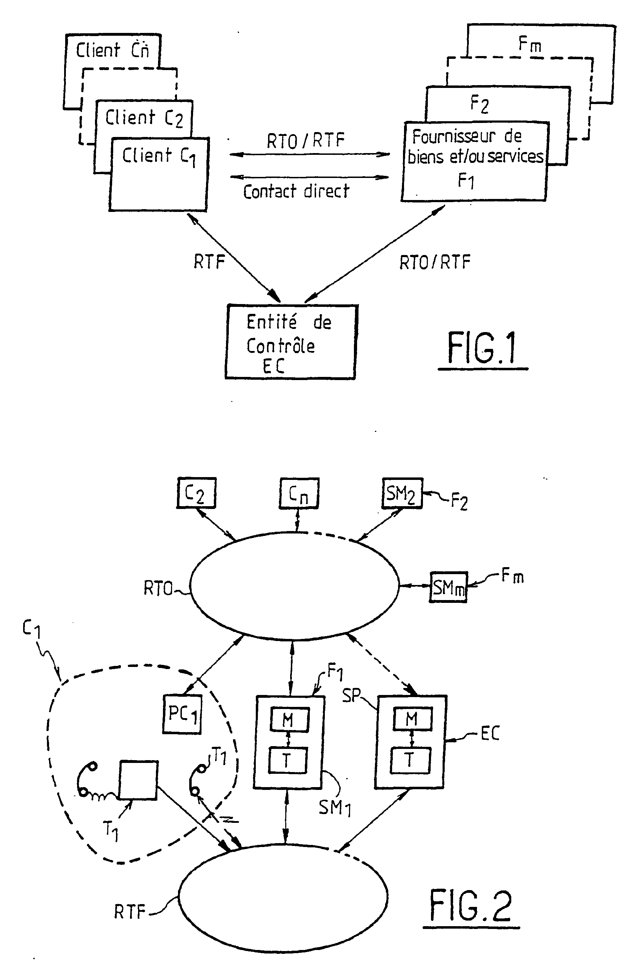

La figure 1 illustre schématiquement les intervenants dans le procédé selon l'invention, ainsi que les différents moyens de liaison qui leur permettent de communiquer entre eux.

D'une manière générale, les intervenants sont constitués d'un ensemble de clients C1, ..., Cn, d'un ensemble de fournisseurs F1, ..., Fm et d'au moins une entité de contrôle EC, sachant que :
- les clients C1, ..., Cn peuvent communiquer avec les fournisseurs F1, ..., Fm par un réseau de télécommunication ouvert RTO de type réseau Internet, par un réseau de télécommunication fermé RTF de type réseau téléphonique, ou directement en se rendant chez un fournisseur de biens et/ou services,
- les fournisseurs F1, ...,Fm et l'entité de contrôle EC peuvent communiquer par un réseau de télécommunication ouvert RTO ou fermé RTF, et
- les clients C1, ..., Cn et l'entité de contrôle EC communiquent par un réseau de télécommunication fermé RTF dans lequel une communication ne peut être établie qu'à partir de la composition d'un numéro d'appel.

Dans le cas d'un commerce électronique par Internet, les fournisseurs F1,..., Fm sont par exemple des marchands équipés de serveurs marchands SM1, ..., SMm, et l'entité de contrôle EC est par exemple un serveur de paiement SP.

Les serveurs marchands SM1, ..., SMm s'affilient au serveur de paiement SP, ce qui se traduit notamment par un échange de leurs numéros d'appel respectifs sur le réseau fermé RTF, par la mise en place d'un mécanisme d'authentification qui leur permettra de s'authentifier mutuellement au cours d'une transaction, et par l'ouverture d'un compte propre à chaque serveur marchand.

Chaque client C1, ..., Cn s'affilie au serveur de paiement SP en lui communiquant son identité mais surtout le numéro d'appel correspondant à son téléphone fixe et/ou portable. En retour, chaque client reçoit un code confidentiel qui, de préférence, ne transitera pas par le réseau ouvert RTO, prend connaissance du numéro d'appel du serveur de paiement SP sur le réseau fermé RTF, et un compte lui est ouvert.

Ces opérations préalables d'affiliation étant effectuées, on va décrire ci-après un exemple de transaction entre le client C1 et le serveur marchand SM1 selon le procédé de l'invention dans le cas d'un commerce électronique sur un réseau de télécommunication ouvert RTO de type réseau Internet, comme cela est illustré sur la figure 2.

Dans cet exemple, on considère que le client C1 est équipé d'un poste client PC1, tel un micro-ordinateur classique ou analogue, qui est connecté sur le réseau ouvert RTO, et d'un terminal T1 qui est constitué par un poste téléphonique fixe ou portable au moyen duquel il peut se connecter sur un réseau de télécommunication fermé RTF de type réseau téléphonique ou analogue.

D'une manière générale, chaque serveur marchand SM1, ..., SMm et le serveur de paiement SP sont équipés de moyens informatiques qui comprennent notamment une unité de traitement T et un ensemble mémoire M avec une pluralité de fichiers dans lesquels sont enregistrées les données nécessaires à la mise en oeuvre du procédé selon l'invention.

Dans une première étape, le client C1 utilise le poste client PC1 et le réseau ouvert RTO pour visiter le site du serveur marchand SM1 et décide de faire un achat correspondant à un produit ou un service. Une fois que la décision d'achat est prise, le client C1 transmet sa demande d'achat au serveur marchand SM1 par le réseau ouvert RTO et s'identifie comme affilié au serveur de paiement SP en lui communiquant son numéro de compte. En réponse, le serveur marchand SM1 élabore un code de transaction qui n'a pour but que d'identifier l'achat du client C1 et le montant de cet achat. Le code de transaction est communiqué au client C1 par le réseau ouvert RTO par exemple, sachant qu'il y a possibilité de sécuriser la transmission de ce code, mais cette sécurisation n'est pas indispensable dès l'instant où la confidentialité de ce code n'est pas nécessaire à la sécurisation de la transaction.

Dans une deuxième étape, le serveur marchand SM1 compose le numéro d'appel du serveur de paiement SP via le réseau fermé RTF par exemple pour lui transmettre une séquence d'informations, de manière à ce que le serveur de paiement puisse identifier le serveur marchand SM1, le client C1 et tout ou partie des caractéristiques de la transaction. Cette séquence d'information est transmise par le réseau fermé RTF par exemple. Ensuite, un dialogue bidirectionnel s'établit entre les deux serveurs SM1 et SP sur la base d'un mécanisme d'authentification qui va permettre au serveur marchand SM1 de s'assurer qu'il est bien en communication avec le serveur de paiement SP auquel il est affilié, et à ce dernier de pouvoir être sûr qu'il ne communique pas avec un serveur marchand pirate. Le mécanisme d'authentification prendra notamment en compte les numéros d'appel respectifs des deux serveurs SM1 et SP, et peut faire intervenir un échange de clés, si possible partiel, qui seront traitées par des algorithmes appropriés. Le mécanisme d'authentification n'est pas en soi une nouveauté de l'invention sachant, par ailleurs, que l'on connaît de nombreux de ces mécanismes parmi lesquels on fera un choix approprié.

Dans une troisième étape, le serveur de paiement SP et le client C1 vont communiquer entre eux par le réseau fermé RTF et ce, à l'initiative du serveur de paiement SP.

Ce dernier compose le numéro d'appel du client qui aboutit via le réseau fermé RTF au téléphone fixe ou portable T1 du client C1. Une fois la communication établie, le serveur de paiement SP transmet par le réseau fermé RTF une séquence d'informations pour permettre au client C1 d'identifier son achat. En retour, le client C1 valide son achat en transmettant au serveur de paiement SP via le réseau fermé RTF le code confidentiel qui lui a été attribué lors de l'opération d'affiliation. Le serveur de paiement SP peut ainsi déterminer qu'il est bien en communication avec le client C1 qui vient de faire un achat, puisqu'il a pu l'identifier à partir de son numéro d'appel et de son code confidentiel, ces deux informations formant un couple de données propre au client C1 et qui a été mémorisé par le serveur de paiement SP.

L'appel du client C1 **étant** à l'initiative du serveur de paiement SP, le client C1 est censé confirmer son achat en transmettant son code confidentiel dans un laps de temps qui peut être également déterminé. Si la confirmation du client C1 n'intervient pas au terme de ce laps de temps, le serveur de paiement SP annule la transaction.

Dans une quatrième étape, le serveur de paiement SP qui a identifié le client C1 et eu validation de son achat, se met en communication avec le serveur marchand SM1 via le réseau fermé RTF par exemple avant de procéder à l'opération de paiement proprement dite. Le dialogue qui s'établit entre les deux serveurs SP et SM1 peut être du même type que celui qui est intervenu au cours de la deuxième étape pour leur permettre de s'authentifier l'un l'autre. Une fois cette authentification effectuée, le serveur de paiement débite le compte du client C1 et crédite le compte du serveur marchand SM1.

D'une manière générale, on préférera rendre systématique le processus d'authentification entre le serveur de paiement SP et le serveur marchand SM1, notamment dans le cas où les deux serveurs ont été déconnectés l'un de l'autre pendant l'opération de validation de l'achat du client C1 qui intervient au cours de la deuxième étape précitée.

La transaction qui vient d'être décrite n'est qu'un exemple de mise en oeuvre du procédé selon l'invention, sachant que l'on peut envisager plusieurs variantes.

Selon une première variante, on peut envisager que le client C1 se mette en communication avec le serveur de paiement SP pour se faire allouer sur son compte un crédit déterminé que le client C1 devra utiliser dans un laps de temps.déterminé par exemple. Dans ce cas, cette communication préalable entre le client C1 et le serveur de paiement SP vaudra validation par le client C1 de tous ses achats dont le montant cumulé n'excède pas le crédit alloué ou restant.

Cette variante présente un certain intérêt pour des parents qui peuvent permettre à leurs enfants de pouvoir faire des achats en toute sécurité.

Dans l'exemple de mise en oeuvre du procédé tel que précédemment décrit, on a considéré que le premier réseau de télécommunication était un réseau ouvert de type Internet mais, en variante, on pourrait n'utiliser qu'un seul réseau constitué par le second réseau fermé RTF.

Par ailleurs, on a considéré que le client C1 disposait d'un poste client PC1 et d'un terminal T1 fixe ou portable. En variante, le poste client PC1 et le terminal T1 de certains clients peuvent être regroupés au sein d'une même unité qui est constituée par un téléphone portable.

Cette dernière solution permet de mettre en oeuvre le procédé d'une manière particulièrement avantageuse, en particulier pour développer le commerce sur l'Internet mobile.

Par ailleurs, un client aura la possibilité d'entrer chez un fournisseur tel un commerçant, une banque ou un organisme financier par exemple pour procéder à une transaction alors qu'il ne dispose pas d'espèces, de carte bancaire ou de chéquier, voire même sans pouvoir justifier de son identité, à condition que le fournisseur et le client soient affiliés à une entité de contrôle.

Enfin, le procédé selon l'invention permet d'envisager un achat qui peut être effectué par un enfant d'un parent qui est affilié au serveur de paiement SP par le numéro de compte qui lui a été attribué.

Ainsi, un enfant peut entrer dans une boutique ou un magasin tenu ou affilié à un serveur marchand pour procéder à un achat et il lui suffit de communiquer au serveur marchand le numéro de compte ou le numéro **d'appel téléphonique** de son parent par exemple pour que la transaction puisse se dérouler en toute sécurité, dès l'instant où dans la transaction c'est le parent qui se substitue à l'enfant. Autrement dit, c'est le parent qui valide la transaction et c'est l'enfant qui reçoit du fournisseur le bien ou le service. D'une manière plus générale, l'enfant est un client qui n'est pas affilié à l'entité de contrôle, et le parent est un client qui est affilié à l'entité de contrôle. Dans ce cas, c'est l'entité de contrôle en l'occurrence le serveur de paiement qui prend l'initiative d'appeler le parent pour que ce dernier valide ou non la transaction effectuée par son enfant ou toute autre personne de sa connaissance.

Le procédé tel que défini précédemment peut être mis en oeuvre par un système simple dès l'instant où il ne nécessite pas de moyens informatiques particuliers, mais une simple combinaison de moyens connus en soi tels que ceux qui ont été mentionnés dans les exemples décrits précédemment en référence aux figures 1 et 2.

## Revendications

1. Procédé pour sécuriser une transaction via un réseau de télécommunication, le procédé faisant au moins intervenir un client (C1), un fournisseur de biens et/ou de services (F1) et une entité de contrôle (EC), procédé qui est **caractérisé en ce qu'**il consiste, une fois que le client (C1) a décidé de la transaction près dudit fournisseur (F1), à utiliser un réseau de télécommunication fermé (RTF) de type réseau téléphonique, qui nécessite la composition d'un numéro d'appel pour mettre en communication le client (C1) et l'entité de contrôle (EC) et à faire établir cette communication à l'initiative de l'entité de contrôle (EC), de manière à permettre au client (C1) de valider sa transaction et à l'entité de contrôle (EC) d'identifier le client, et à faire transmettre par le client (C1) un code confidentiel par le réseau de télécommunication fermé (RTF) établi uniquement entre l'entité de contrôle (EC) et le client (C1) pour valider son achat et permettre à l'entité de contrôle (EC) d'identifier le client (C1) à partir du numéro d'appel du client et de son code confidentiel qui sont connus de l'entité de contrôle (EC).

2. Procédé selon la revendication 1, **caractérisé en ce qu'**un client (C2) non affilié à l'entité de contrôle (EC) peut effectuer une transaction en entrant directement en contact avec un fournisseur (F1) dans une boutique ou magasin tenu par ce dernier, à condition que le client (C2) communique le numéro d'appel téléphonique d'un client (C1) affilié à l'entité de contrôle (EC), et à faire appeler le client (C1) par l'entité de contrôle (EC) pour valider la transaction effectuée par le client (C2).

3. Procédé selon la revendication 1 ou 2, **caractérisé en ce qu'**il consiste à faire attribuer au client (C1) par l'entité de contrôle (EC) un numéro de compte et un code confidentiel qui est un code autre qu'un code confidentiel de carte bancaire.

4. Procédé selon la revendication 1 ou 2, **caractérisé en ce qu'**il consiste à ne pas faire transiter le code confidentiel du client (C1) par le réseau de télécommunication ouvert (RTO) de type réseau Internet.

5. Procédé selon l'une quelconque des revendications 1 à 4, **caractérisé en ce qu'**il consiste à connecter le client (C1) et le fournisseur (F1) par un réseau de télécommunication fermé de type réseau téléphonique.

6. Procédé selon l'une quelconque des revendications précédentes, **caractérisé en ce qu'**il consiste à connecter le fournisseur (F1) et l'entité de contrôle (EC) par ledit réseau de télécommunication ouvert (RTO) ou fermé (RTF).

7. Procédé selon l'une quelconque des revendications précédentes, **caractérisé en ce qu'**il consiste à équiper le client (C1) d'un poste client (PC1) qui est connecté sur le réseau de télécommunication ouvert (RTO) ou fermé (RTF), et d'un terminal (T1) qui est constitué par un téléphone fixe et/ou portable connecté sur le réseau de télécommunication fermé (RTF).

8. Procédé selon la revendication 7, **caractérisé en ce qu'**il consiste à regrouper le poste client (PC1) et son terminal (T1) dans une même unité qui est constituée d'un téléphone portable.

9. Procédé selon l'une quelconque des revendications précédentes, **caractérisé en ce qu'**il consiste, lorsque le client (C1) s'est décidé sur une transaction, à faire communiquer par le client (C1) au moins son numéro de compte au fournisseur (F1) et à faire communiquer le fournisseur (F1) et l'entité de contrôle (EC) pour permettre à ce dernier d'identifier le client (C1) par son numéro de compte qui lui a été communiqué par le fournisseur (F1) ainsi que tout ou partie des caractéristiques de la transaction.

10. Procédé selon l'une quelconque des revendications précédentes, **caractérisé en ce qu'**il consiste, lorsque le client (C1) et l'entité de contrôle (EC) sont en communication pour permettre au client (C1) de valider sa transaction et que cette communication est à l'initiative de l'entité de contrôle (EC), à allouer un laps de temps déterminé au client (C1) pour valider sa transaction sous peine d'invalidation par l'entité de contrôle (EC).

11. Procédé selon l'une quelconque des revendications précédentes, **caractérisé en ce qu'**il consiste à mettre en communication le client (C1) et l'entité de contrôle (EC) à l'initiative du client (C1) pour se faire allouer un crédit déterminé sur son compte qui doit être utilisé dans une période de temps déterminée.

12. Procédé selon la revendication 11, **caractérisé en ce qu'**il consiste à considérer la communication entre le client (C1) et l'entité de contrôle (EC) comme valant validation du client (C1) de toutes ses transactions d'un montant cumulé inférieur au crédit alloué par l'entité de contrôle (EC).

## Claims

1. Method of rendering a transaction across a telecommunication network secure, the method involving intervention by a client (C1), a supplier of goods and/or services (F1) and a control entity (EC), which method is **characterised in that** once the client (C1) has decided to enter into the transaction with said supplier (F1), it comprises using a closed telecommunication network (RTF) of the telephone network type which requires a call number to be dialled in order to establish a call between the client (C1) and the control entity (EC), and to establish this call at the initiative of the control entity (EC) to enable the client (C1) to validate his transaction and the control entity (EC) to identify the client, and to prompt the client (C1) to transmit a confidential code via the closed telecommunication network (RTF) set up solely between the control entity (EC) and the client (C1) in order to validate his purchase and enable the control entity (EC) to identify the client (C1) on the basis of the client's call number and his confidential code, which are known to the control entity (EC).

2. Method as claimed in claim 1, **characterised in that** a client (C2) that is not affiliated with the control entity (EC) can enter into a transaction by entering into direct contact with a supplier (F1) in a shop or store operated by the latter on condition that the client (C2) communicates the telephone call number of a client (C1) affiliated with the control entity (EC) and requests that the control entity (EC) call client (C1) in order to validate the transaction entered into by client (C2).

3. Method as claimed in claim 1 or 2, **characterised in that** the control entity (EC) allocates to the client (C1) an account number and a confidential code which is a code other than a confidential bank card code.

4. Method as claimed in claim 1 or 2, **characterised in that** the confidential code of the client (C1) is not transmitted across the open telecommunication network (RTO) of the Internet network type.

5. Method as claimed in any one of claims 1 to 4, **characterised in that** the client (C1) and the supplier (F1) are connected via a closed telecommunication network of the telephone network type.

6. Method as claimed in any one of the preceding claims, **characterised in that** the supplier (F1) is connected to the control entity (EC) via said open (RTO) or closed (RTF) telecommunication network.

7. Method as claimed in any one of the preceding claims, **characterised in** the client (C1) is equipped with a client station (PC1) which is connected to the open (RTO) or closed (RTF) telecommunication network and a terminal (T1) which comprises a fixed and/or portable telephone connected to the closed telecommunication network (RTF).

8. Method as claimed in claim 7, **characterised in that** the client station (PC1) and its terminal (T1) are combined in a same unit, which comprises a portable telephone.

9. Method as claimed in any one of the preceding claims, **characterised in that** when the client (C1) has decided to enter into a transaction, the client (C1) transmits at least one account number to the supplier (F1) and prompts a call to be established between the supplier (F1) and the control entity (EC) to enable the latter to identify the client (C1) on the basis of his account number which has been transmitted to it by the supplier (F1) as well as all or some of the characteristics of the transaction.

10. Method as claimed in any one of the preceding claims, **characterised in that,** when the client (C1) and the control entity (EC) are participating in a call to enable the client (C1) to validate his transaction and this call was initiated by the control entity (EC), a given amount of time is allocated to the client (C1) in order to validate his transaction, on expiry of which it will be invalidated by the control entity (EC).

11. Method as claimed in any one of the preceding claims, **characterised in that** a call is established between the client (C1) and the control entity (EC) at the initiative of the client (C1) to enable a given credit to be allocated to his account, which must be used within a specific period of time.

12. Method as claimed in claim 11, **characterised in that** the call between the client (C1) and the control entity (EC) is considered as being a validation on the part of the client (C1) of all his transactions totalling an amount below the credit allocated by the control entity (EC).

## Patentansprüche

1. Verfahren zum Absichern einer Transaktion über ein Telekommunikationsnetz, wobei das Verfahren wenigstens einen Kunden (C1), einen Anbieter von Gütern und/oder Diensten (F1) und eine Kontrollinstanz (EC) eingreifen lässt, wobei das Verfahren **dadurch gekennzeichnet ist, dass** es darin besteht, sobald der Kunde (C1) über die Transaktion bei dem Anbieter (F1) entschieden hat, ein geschlossenes Telekommunikationsnetz (RTF) vom Telefonnetztyp zu nutzen, was das Wählen einer Rufnummer erfordert, um den Kunden (C1) und die Kontrollinstanz (EC) in Verbindung zu bringen, und diese Verbindung auf Initiative der Kontrollinstanz (EC) herstellen zu lassen, so dass ermöglicht wird, dass der Kunde (C1) seine Transaktion validiert und dass die Kontrollinstanz (EC) den Kunden identifiziert, und durch den Kunden (C1) einen vertraulichen Code über das geschlossene Telekommunikationsnetz (RTF) übermitteln zu lassen, welches ausschließlich zwischen der Kontrollinstanz (EC) und dem Kunden (C1) hergestellt ist, um seinen Kauf zu validieren und der Kontrollinstanz (EC) zu ermöglichen, den Kunden (C1) anhand der Rufnummer des Kunden und seinem vertraulichem Code, welche der Kontrollinstanz (EC) bekannt sind, zu identifizieren.

2. Verfahren nach Anspruch 1, **dadurch gekennzeichnet, dass** ein Kunde (C2), welcher nicht an die Kontrollinstanz (EC) angeschlossen ist, eine Transaktion bewerkstelligen kann, indem er mit einem Anbieter (F1) in einem Geschäft oder Kaufhaus, welcher von letzterem unterhalten wird, direkt in Kontakt tritt, vorausgesetzt, dass der Kunde (C2) die Telefonrufnummer eines an die Kontrollinstanz (EC) angeschlossenen Kunden (C1) mitteilt und den Kunden (C1) durch die Kontrollinstanz (EC) anrufen lässt, um die durch den Kunden (C2) bewerkstelligte Transaktion validieren zu lassen.

3. Verfahren nach Anspruch 1 oder 2, **dadurch gekennzeichnet, dass** es darin besteht, dem Kunden (C1) durch die Kontrollinstanz (EC) eine Kontonummer und einen vertraulichen Code vergeben zu lassen, welcher ein anderer Code ist als ein vertraulicher Bankkartencode.

4. Verfahren nach Anspruch 1 oder 2, **dadurch gekennzeichnet, dass** es darin besteht, den vertraulichen Code des Kunden (C1) nicht durch das offene Telekommunikationsnetz (RTO) vom Internet-Netztyp passieren zu lassen.

5. Verfahren nach einem der Ansprüche 1-4, **dadurch gekennzeichnet, dass** es darin besteht, den Kunden (C1) und den Anbieter (F1) über ein geschlossenes Telekommunikationsnetz vom Telefonnetztyp zu verbinden.

6. Verfahren nach einem der vorhergehenden Ansprüche, **dadurch gekennzeichnet, dass** es darin besteht, den Anbieter (F1) und die Kontrollinstanz (EC) über das offene Telekommunikationsnetz (RTO) oder das geschlossene Telekommunikationsnetz (RTF) zu verbinden.

7. Verfahren nach einem der vorhergehenden Ansprüche, **dadurch gekennzeichnet, dass** es darin besteht, den Kunden auszustatten mit einer Kundenanlage (PC1), welche mit dem offenen Telekommunikationsnetz (RTO) oder geschlossenen Telekommunikationsnetz (RTF) verbunden ist, und einem Terminal (T1), welches gebildet ist durch ein ortsfestes und/oder tragbares Telefon, das mit dem geschlossenen Telekommunikationsnetz (RTF) verbunden ist.

8. Verfahren nach Anspruch 7, **dadurch gekennzeichnet, dass** es darin besteht, die Kundenanlage (PC1) und ihr Terminal (T1) in derselben Einheit zusammenzufassen, welche durch ein tragbares Telefon gebildet ist.

9. Verfahren nach einem der vorhergehenden Ansprüche, **dadurch gekennzeichnet, dass** es darin besteht, wenn der Kunde (C1) sich zu einer Transaktion entschieden hat, durch den Kunden (C1) wenigstens seine Kontonummer an den Anbieter (F1) übermitteln zu lassen und den Anbieter (F1) und die Kontrollinstanz (EC) kommunizieren zu lassen, um der letzteren zu ermöglichen, den Kunden (C1) durch seine Kontonummer, welcher dieser über den Anbieter (F1) übermittelt hat, sowie alle oder einen Teil der Eigenschaften der Transaktion zu identifizieren.

10. Verfahren nach einem der vorhergehenden Ansprüche, **dadurch gekennzeichnet, dass** es darin besteht, wenn der Kunde (C1) und die Kontrollinstanz (EC) in Verbindung sind, um dem Kunden (C1) zu ermöglichen, seine Transaktion zu validieren, und diese Verbindung auf Initiative der Kontrollinstanz (EC) ist, dem Kunden (C1) bei Strafe einer Invalidierung durch die Kontrollinstanz (EC) einen bestimmten Zeitraum zur Validierung seiner Transaktion einzuräumen.

11. Verfahren nach einem der vorhergehenden Ansprüche, **dadurch gekennzeichnet, dass** es darin besteht, den Kunden (C1) und die Kontrollinstanz (EC) auf Initiative des Kunden (C1) in Verbindung zu bringen, um sich einen bestimmten Kredit auf seinem Konto bewilligen zu lassen, welcher in einer bestimmten Zeitspanne genutzt werden muss.

12. Verfahren nach Anspruch 11, **dadurch gekennzeichnet, dass** es darin besteht, die Verbindung zwischen dem Kunden (C1) und der Kontrollinstanz (EC) als geltende Validierung des Kunden (C1) für alle seine Transaktionen einer kumulierten Gesamtsumme zu betrachten, welche geringer ist als der durch die Kontrollinstanz (EC) bewilligte Kredit.
